# EUROPEAN PATENT APPLICATION

(11) **EP 2 128 718 A1**
(43) Date of publication of application: **02.12.2009**
(21) Application number: 08155760.5
(22) Date of filing: 07.05.2008
(51) Int. Cl.: G03H 1/02

(54) **Laser holographic film**

(71) Applicant: Cheng, Shih-Hung, Taipei (TW)
(72) Inventor: Cheng, Shih-Pin, Taipei Hsien (TW)
(74) Representative: Lang, Christian

(57) **Abstract**

A laser holographic film has a substrate (10) and a display layer (13). The substrate (10) has an upper surface, a base (11a, 11b) and an ink layer (12). The ink layer (12) is applied on the base (11a, 11b). The display layer (13) is applied on the upper surface of the substrate (10) and has a holographic coating. The holographic coating is applied on the substrate (10) and undergoes a hot compression molding process to form holographic patterns. The holographic coating (20) is applied on the substrate (10), so cannot be peeled from the substrate (10) and the laser holographic film of the present invention has an improved anti-counterfeiting effect. Further, the display layer is able to protect the ink layer (12) from discolor. Therefore, the laser holographic film is produced simply and efficiently.

## Description

The present invention relates to a laser holographic film, and more particularly to a laser holographic film that has an improved anti-counterfeiting capability, whilst being simple to manufacture and reduces waste.

A product may be packed in a box. The box can be made of paper, cardboard, plastic or the like. In order to prevent the product from being counterfeited, the box may further comprise an anti-counterfeiting label stuck onto the box. A conventional anti-counterfeiting label comprises a substrate and a laser membrane. The laser membrane is attached to the paper substance and is made of plastic, such as polyvinyl chloride (PVC) and polyethylene glycol terephthalate (PET) to show holographic patterns, thereby preventing counterfeiting by informing buyers of genuine products.

However, the anti-counterfeiting label is easily peeled from the box and stuck on another box containing a non-genuine product. Therefore, the anti-counterfeiting label may be used against its original aim and used to deceive buyers into believing a non-genuine product to be genuine.

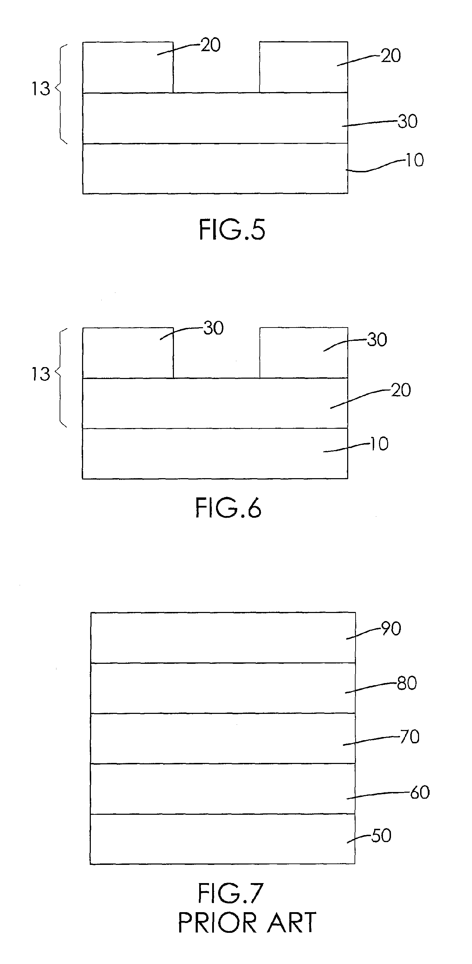

With reference to Fig. 7, to overcome disadvantages of the conventional anti-counterfeiting label, a conventional laser holographic film is developed and has a paper substrate (50), a holographic coating layer (60), aluminum layer (70) and ink layer (80). The holographic coating layer (60) is coated on the paper substrate (50) to show holographic patterns. The aluminum layer (70) is formed on the holographic coating layer (60) by evaporation. The ink layer (80) is coated on the aluminum layer (70) to show trademarks, drawings, colors or the like. Therefore, the laser holographic film can be used to form a box that contains a product and the holographic coating layer (60) cannot be removed without damaging the paper substrate (50).

However, because the ink layer (80) is applied after the holographic coating layer (60) is applied and each product requires a unique box with different branding, pattern, description and the like, a manufacturer cannot predict positions of the ink layer (80) and where the hologram should be displayed. Therefore, the holographic coating layer (60) cannot be coated partially on the paper substrate (50).

Furthermore, the ink layer (80) is exposed to environment, so the ink layer (80) may discolor. Therefore, the conventional laser holographic film may further comprise a varnish (90). The varnish (90) is coated on the ink layer (80) to protect the ink layer (80). Accordingly, the conventional laser holographic film has complex procedure and an increased cost due to process complexity and waste.

To overcome the shortcomings, the present invention provides a laser holographic film to mitigate or obviate the aforementioned.

The primary objective of the present invention is to provide a laser holographic film that has an improved anti-counterfeiting capability, whilst being simple to manufacture and reduces waste.

To achieve the objective, the laser holographic film in accordance with the present invention comprises a substrate and a display layer. The substrate has an upper surface, a base and an ink layer. The ink layer is applied on the base. The display layer is applied on the upper surface of the substrate and comprises a holographic coating. The holographic coating is applied on the substrate and undergoes a hot compression molding process to form holographic patterns. The holographic coating is applied on the substrate, so cannot be peeled from the substrate and the laser holographic film has an improved anti-counterfeiting effect. Further, the display layer is able to protect the ink layer from discoloration. Therefore, the laser holographic film is produced simply and efficiently.

Other objectives, advantages and novel features of the invention will become more apparent from the following detailed description when taken in conjunction with the accompanying drawings.

### IN THE DRAWINGS

Fig. 1 is a cross-sectional side view of a laser holographic film in accordance with the present invention;
Fig. 2 is a cross-sectional side view of a first variant of a substrate of the laser holographic film in Fig. 1;
Fig. 3 is a cross-sectional side view of a second variant of the substrate of the laser holographic film in Fig. 2 with an aluminum layer on a paper base;
Fig. 4 is a cross-sectional side view of a second variant of the substrate of the laser holographic film in Fig. 1;
Fig. 5 is a cross-sectional side view of a first variant of a display layer of the laser holographic film in Fig. 1;
Fig. 6 is a cross-sectional side view of a second variant of the display layer of the laser holographic film in Fig. 1; and
Fig. 7 is a cross-sectional side view of a conventional laser holographic film in accordance with the prior art.

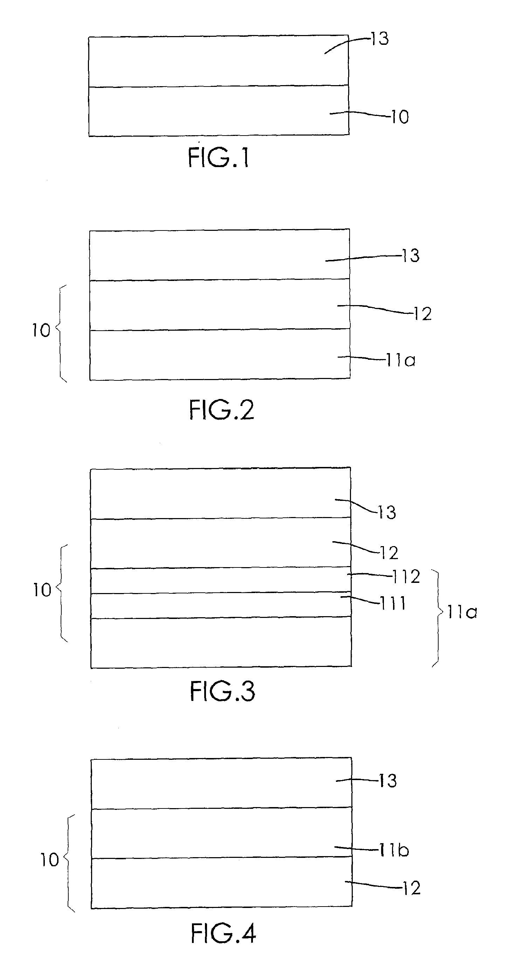

With reference to Fig. 1, a laser holographic film in accordance with the present invention comprises a substrate (10) and a display layer (13).

With further reference to Fig. 2, the substrate (10) has an upper surface and comprises a base and an ink layer (12) and may be later formed into packaging such as a box, bag or the like to present and contain goods for sale.

With further reference to Figs. 3 and 4, the base may be a paper base (11a) or a transparent plastic base (11b) and has an upper surface and a lower surface.

In a first variant of the substrate (10), the base is a paper base (11a) that may have an aluminum layer (111).

The aluminum layer (111) is plated on the paper base (11a) by evaporation and, wherein primer (112) is applied to the aluminum-plated paper base (11a) and the primer (112) is formed on the aluminum layer (111).

The primer (112) is water-based resin. The water-based resin may be a bridging agent having a weight and may comprise a mixture of acrylate resin, isopropanol and water. The acrylate resin is about 33∼37 wt% of the weight of the bridging agent. The isopropanol is about 48∼52 wt% of the weight of the bridging agent. Water is about 13∼17 wt% of the weight of the bridging agent.

In a second variant of the substrate (10), the base is a transparent plastic base (11b).

The ink layer (12) is applied to the base in a predetermined pattern, word, character or the like and comprises at least one color.

In the first variant of the substrate (10), the ink layer (12) is applied to the upper surface of the paper base (11a)

In the second variant of the substrate, the ink layer (12) is applied to the lower surface of the plastic base (11b).

With further reference to Figs. 5 and 6, the display layer (13) is applied on the upper surface of the substrate (10), undergoes a hot compression molding process to form holographic patterns on the upper surface of the substrate (10). The display layer (13) comprises a holographic coating (20) and a protective coating (30a, 30b). The display layer (13) is treated with a surface treatment when the substrate is the paper substrate (11a) and may be treated with a surface treatment when the substrate is the paper substrate (11a) with the aluminum layer (111) before the display layer (13) undergoes the hot compression molding process. The surface treatment comprises applying varnish oil on the display layer (13) to increase brightness of the holographic film.

The holographic coating (20) is applied upon the substrate (10) and undergoes the hot compression molding process to form the holographic patterns and has an upper surface, a lower surface and a softening temperature. The holographic coating (20) may comprise acrylic copolymer, soya bean lecithin and water. Preferably, the acrylic copolymer is about 41∼43 wt% of a total weight of the holographic coating (20), the soya bean lecithin is about 2∼4 wt% of the total weight of the holographic coating (20) and water is about 54∼56 wt% of the total weight of the holographic coating (20).

The hot compression molding process comprises preparing the laser holographic film that has a substrate (10) and a display layer (13); positioning the laser holographic film on a conveyer to be compressed by a hot roller, wherein the roller has a metallic (preferably nickel) outer surface with patterns; and cooling down the laser holographic film to form holographic patterns on the laser holographic film. Because the holographic coating (20) of the laser holographic film softens when it is under high temperature, the patterns on the roller are able to copy on the holographic coating (20). Therefore, after the holographic coating (20) cools down, it becomes hard and shows holographic patterns.

In a first variant of the display layer (13), the holographic coating (20) is partially applied on the upper surface of the substrate (10), so that the laser hologram film shows partially the holographic patterns.

In a second variant of the display layer (13), the holographic coating (20) is applied over an entire upper surface of the substrate (10), so that the laser holographic film shows holographic patterns over the entire surface.

The protective coating (30) is thermally resistant and has a softening temperature. The softening temperature of the protective coating (30) is higher than the softening temperature of the holographic coating (20).

With reference to Fig. 5, in a first variant of the display layer (13), the protective coating (30) is formed between the substrate (10) and the holographic coating (20) and is applied over the entire upper surface of the substrate (10) to protect the substrate (20) during the hot compression molding process.

With reference to Fig. 6, in a second variant of the display layer (13), the protective coating (30) is partially applied on the upper surface of the holographic coating (20) to partially cover the holographic coating (20) therefore, the laser holographic film shows partially the holographic patterns.

The protective coating (30a, 30b) may be thermally resistant flatting oil or non-thermoplastic varnish. Preferably, the thermal resistant flatting oil comprises 40∼45 wt% of acrylic copolymer and 60∼65 wt% of water. Preferably, the non-thermoplastic varnish comprises 45∼55 wt% of acrylic monomer, 40∼50 wt% of epoxy acrylate oligomer and 5 wt% of photo-initiator.

The display layer (13) is coated on the substrate (10), so cannot be peeled from the substrate and the laser holographic film of the present invention has good anti-counterfeiting effect. The holographic coating (20) may be applied over the entire surface of the substrate (10) or may be coated partially on the substrate (10) without covering the ink layer (12) because the ink layer (12) is coated on the base before the holographic coating (20) is coated. Therefore, a manufacturer may decide where to add the holographic patterns once the packaging is completed thereby reducing waste and complexity of production.

Since the holographic pattern is integrated into the packaging, the holographic pattern cannot be removed and transferred to non-genuine products. Moreover, being integrated with the packaging means removal of the packaging damages the holographic pattern and prevents repackaging.

Furthermore, the display layer (13) protects the ink layer (12) from discoloration.

## Claims

1. A laser holographic film **characterized in that:**
a substrate (10) comprising
an upper surface;
a base; and
an ink layer (12) being applied on the base; and
a display layer (13) being applied on the upper surface of the substrate (10) and having a holographic coating (20) being applied upon the substrate (10) and undergoing a hot compression molding process to form holographic patterns.

2. The laser holographic film as claimed in claim 1, wherein
the base is a paper base (11a) and has an upper surface;
the ink layer (12) is coated on the upper surface of the base; and
the display layer (13) is treated with a surface treatment by applying varnish oil on the display layer (13) before undergoes the hot compression molding process.

3. The laser holographic film as claimed in claim 1, wherein
the base is a paper base (11a) that comprises an upper surface and an aluminum layer (111) being plated on the paper base (11a) by evaporation and, wherein the paper base (11a) is treated with primer (112) being a water-based resin and the primer (112) is formed on the aluminum layer (111); and
the ink layer (12) is coated on the upper surface of the base (11a).

4. The laser hologram film as claimed in claim 3, wherein the display layer (13) is treated with a surface treatment by applying varnish oil on the display layer (13) before undergoes the hot compression molding process.

5. The laser holographic film as claimed in claim 1, wherein
the base (11b) is transparent plastic base that has a lower surface; and
the ink layer (12) is applied to the lower surface of the plastic base (11b).

6. The laser holographic film as claimed in claim 1, wherein the holographic coating (20) comprises
acrylic copolymer being about 41∼43 wt% of a total weight of the holographic coating (20);
soya bean lecithin being about 2∼4 wt% of the total weight of the holographic coating (20); and
water being about 54∼56 wt% of the total weight of the holographic coating (20).

7. The laser holographic film as claimed in claims 1, 2, 3, 4, 5 or 6, wherein the holographic coating (20) is applied over an entire upper surface of the substrate (10) and has an upper surface.

8. The laser holographic film as claimed in claim 7, wherein
the hologram coating (20) has a softening temperature; and
the display layer (13) further has a protective coating (30) being thermally resistant, being partially applied on the upper surface of the holographic coating (20) and having a softening temperature being higher than the softening temperature of the holographic coating (20).

9. The laser holographic film as claimed in claims 1, 2, 3, 4, 5 or 6, wherein
the holographic coating (20) is partially applied to the substrate (10) and has a softening temperature; and
the display layer (13) further comprises a protective coating (30) being thermally resistant, applied over an entire upper surface of the substrate (10) and between the substrate (10) and the holographic coating (20), and having a softening temperature being higher than the softening temperature of the holographic coating (20).
